# EUROPEAN PATENT SPECIFICATION

(11) **EP 2 547 215 B1**
(45) Date of publication and mention of the grant of the patent: **23.08.2017**
(21) Application number: 11756600.0
(22) Date of filing: 03.03.2011
(51) Int. Cl.: A23C 9/142, B01D 63/06, B01D 65/08

(54) **MEMBRANE FILTRATION AND MEMBRANE FILTRATION ASSEMBLY**
MEMBRANFILTERUNG UND MEMBRANFILTERUNGSANORDNUNG
FILTRATION DE MEMBRANE ET ENSEMBLE FILTRATION DE MEMBRANE

(30) Priority: 17.03.2010 NO 20100391
(43) Date of publication of application: 23.01.2013
(73) Proprietor: Tine SA, 0191 Oslo (NO)
(72) Inventor: HOFFMANN, Tom, N-1550 Hølen (NO)
(74) Representative: Onsagers AS
(86) International application number: PCT/NO2011/000073
(87) International publication number: WO 2011/115498

(56) References cited:
- EP-A1- 1 943 907
- WO-A1-2006/123972
- GB-A- 2 273 885
- SE-A- 8 702 364
- US-A- 5 654 025
- US-B1- 6 485 762
- ECKNER K F ET AL: "EFFECTS OF TEMPERATURE AND PH DURING MEMBRANE CONCENTRATION OF SKIM MILK ON FOULING AND CLEANING EFFICIENCY", MILCHWISSENSCHAFT, VV GMBH VOLKSWIRTSCHAFTLICHER VERLAG. MUNCHEN, DE, vol. 48, no. 4, 1 January 1993 (1993-01-01), pages 187-191, XP000361707, ISSN: 0026-3788
- RICE G ET AL: "Fouling of NF membranes by dairy ultrafiltration permeates", JOURNAL OF MEMBRANE SCIENCE, ELSEVIER SCIENTIFIC PUBL.COMPANY. AMSTERDAM, NL, vol. 330, no. 1-2, 20 March 2009 (2009-03-20), pages 117-126, XP025962404, ISSN: 0376-7388, DOI: 10.1016/J.MEMSCI.2008.12.048 [retrieved on 2008-12-31]
- WANG B-J ET AL: "Effect of operating temperature on component distribution of West Indian cherry juice in a microfiltration system", LWT- FOOD SCIENCE AND TECHNOLOGY, ACADEMIC PRESS, UNITED KINGDOM, vol. 38, no. 6, 1 September 2005 (2005-09-01), pages 683-689, XP004833870, ISSN: 0023-6438, DOI: 10.1016/J.LWT.2004.09.002
- BORGSTROM U: "Norwegian cheese plant pilots Bactocatch", CHILTON'S FOOD ENGINEERING, B N P MEDIA, US, vol. 63, no. 2, 1 January 1991 (1991-01-01), page 30,33, XP009159443, ISSN: 0193-323X
- TULEY L: "HIGH TECH COMES TO FILTRATION", FOOD MANUFACTURE, WILLIAM REED PUBLISHING, LONDON, GB, vol. 63, no. 6, 1 June 1988 (1988-06-01), page 45,47, XP000578331, ISSN: 0015-6477

## Description

### FIELD OF THE INVENTION

The present invention relates to a method for processing dairy products by means of membrane filtration, where fouling in the membrane is significantly reduced/avoided without significantly reducing the flow through the membrane module. The present invention also relates to a membrane filtration assembly suitable to practice the method according to the present invention.

### BACKGROUND OF THE INVENTION

Raw milk is almost without exception separated into a cream phase and a skim milk phase. Depending on which end product the milk is to be employed for, both of these phases are treated differently in a dairy. The skim milk which is to be further refined by protein fractionation is often pasteurized after which it is cooled down to approximately 4°C and is stored in a tank till used in production.

In order to reduce fouling in the membranes, it has been suggested to subject the skim milk to a pre-treatment process before membrane filtration (WO02/069724). Said pre-treatment involves heating the skim milk to a temperature in the range 50-55 °C for some minutes. The heat treated product is then kept in an open vessel to release the surplus of air and to allow the chemical reactions, which takes place in the milk on heating, to stabilize.

Even though this pre-treatment has previously been shown to reduce the risk of fouling in the membranes, i.e. that the membranes becomes blocked and production time is lost, it has also previously been disclosed that the lengthy stay time at this temperature range entails an undesirable growth of harmful microorganisms.

In order to avoid undesirable growth of harmful microorganisms and to further reduce fouling in the membranes, it has been suggested to reduce the stay time in the open vessel and see to that the skim milk (retentate) displays a falling, or alternatively maintained, temperature curve during membrane filtration (WO06/123972).

During membrane filtration, the pumps in the membrane filtration assembly normally increase the temperature of the skim milk/retentate by 2-6 °C. In order to maintain or decrease the temperature of the skim milk/retentate during membrane filtration, it is common to have some kind of cooling device placed in the circulation of the retentate (normally for small plants/pilot plants) (NO310173). Optionally, the skim milk is cooled down, prior to membrane filtration, to a temperature that ensure that the temperature in the circulation do not exceed the milk pre-treatment temperature.

However, if the temperature of the skim milk is reduced by 1 °C, the flow through the membrane module will decrease with about 2-3%, i.e. the membrane filtration efficiency is significantly reduced.

K. Eckner et al., "Effects of temperature and pH during membrane concentration of skim milk on fouling and cleaning efficiency", Milchwissenschaft, VV GmbH Volkswirtschaftlicher Verlag, DE, Vol. 48, No. 4, 1 January 1993, pages 187-191 describes the effect on temperature during membrane processing and its effect on fouling and further describes that lower temperature in the process prevents fouling.

US 5,654,025 relates to a system for producing a milk concentrate by membrane filtration of raw milk comprising a cooling arrangement for cooling and maintaining the raw milk to less than 45°F (= 7.2°C) and a serial array of membrane filtration units operatively connected with the cooling arrangement for producing the a cooled permeate component and a cooled concentrate component. The key feature of US 5,654,025 is to keep the temperature of the raw milk low (i.e. below 7.2°C) during the whole process.

One object according to the present invention is to provide a method for processing dairy products by means of membrane filtration, where fouling in the membranes is significantly reduced/avoided without significantly reducing the flow through the membrane module.

### SUMMARY OF THE INVENTION

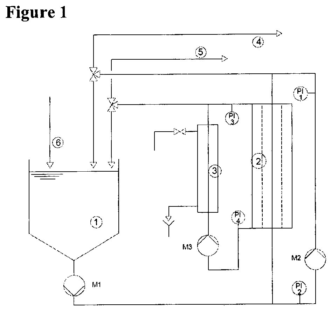

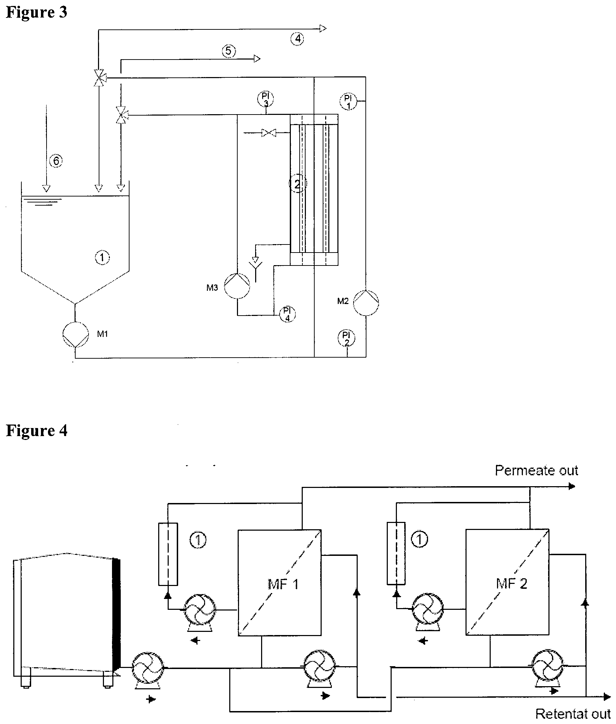

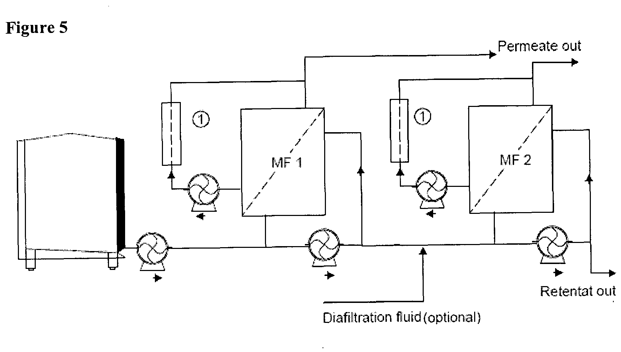

A first aspect of the present invention relates to a method for processing dairy products by means of membrane filtration, said method comprising the following steps:
a) optionally, supplying the dairy product to a balance tank (figure 1.1; figure 3.1);
b) subjecting the dairy product to membrane filtration (figure 1.2; figure 3.2; figure 4.MF1/MF2; figure 5.MF1/MF2) to form a permeate fraction and a retentate fraction, wherein said dairy product is heated to a temperature in the range 50-65 °C prior to membrane filtration; and
c) cooling the permeate fraction (figure 1.3; figure 3.2; figure 4.1; figure 5.1) to a temperature that is lower than the temperature of the retentate fraction, wherein the temperature differential between the permeate and retentate fraction is at least 1 °C, and wherein at least part of the permeate fraction is circulated over a permeate inlet and outlet of a membrane filtration module, resulting in a cooling of the membrane surfaces.

A second aspect of the present invention relates to a membrane filtration assembly for carrying out the method above, comprising
a) feed inlet opening to the retentate side of a membrane filter;
b) retentate outlet;
c) means for recirculation at least part of the retentate from the retentate outlet to the retentate inlet;
d) permeate outlet;
e) permeate inlet;
f) means for recirculation at least part of the permeate from the permeate outlet to the permeate inlet; and
g) cooling device being arranged to maintain a lower temperature in the permeate flow than in the retentate flow, wherein said cooling device is located in the permeate circuit between the permeate inlet and permeate outlet;
said inlets, outlets and means for recirculation being arranged to maintain a retentate flow on the retentate side of the membrane filter and a permeate flow on the permeate side of the membrane filter, preferably in such a manner that the two flows are cocurrently passed along the membrane filter.

Preferred embodiments of the present invention are set forth in the dependent claims.

### DESCRIPTION OF THE FIGURES

Preferred embodiments of the present invention will now be illustrated in more detail with reference to the accompanying figures.
**Figure 1** illustrates a membrane filtration plant, wherein a separate cooler (3) is included in the permeate circulation, for which the method according to the present invention may be employed.(1) Balance tank; (2) Membrane filtration module; (3) Cooler; (4) Retentate out; (5) Permeate out; (6) Product feed; (M) Circulation pump; (PI) Pressure indicator.

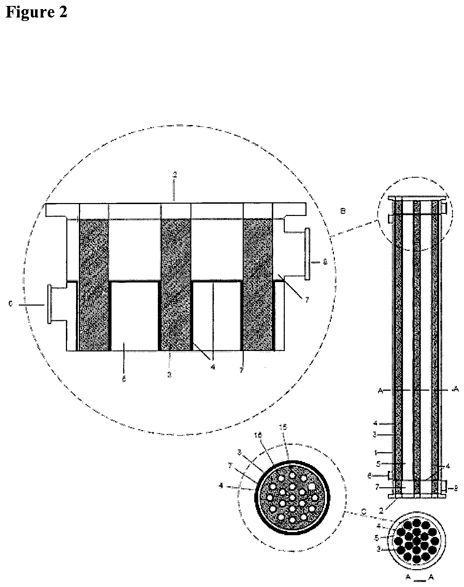

**Figure 2** illustrates a membrane module with an integrated cooling device. (1) Surrounding housing; (2) Ends of the surrounding housing; (3) Membranes; (4) Tube heat exchanger; (5) Space containing cooling media; (6) Connections to cooling media; (7) Space containing permeate; (8) Permeate inlet and outlet; (15) Plurality of retentate channels; (16) Filter membrane.
**Figure 3** illustrates a membrane filtration plant, wherein the membrane module has an integrated cooling device (2), for which the method according to the present invention may be employed. (1) Balance tank; (2) Membrane filtration module with integrated cooling device; (4) Retentate out; (5) Permeate out; (6) Product feed (M) Circulation pump; (PI) Pressure indicator.
**Figure 4** illustrates a membrane filtration plant, wherein two membrane filtration modules (MF1 and MF2 respectively) are connected in parallel having separate cooler devices (1) included in the permeate circulation.
**Figure 5** illustrates a membrane filtration plant, wherein two membrane filtration modules (MF1 and MF2 respectively) are connected in series having separate cooler devices (1) included in the permeate circulation.

### DETAILED DESCRIPTION OF THE INVENTION

Since precipitation of calcium phosphate is assumed to be the main cause of fouling in the membranes and the solubility of calcium phosphate is known to decrease with increasing temperature, one would assume that the temperature of the skim milk phase should be as low as possible. However, as previously disclosed, it is also known that if the temperature of the skim milk phase is reduced by 1°C, the flow through the membrane module is reduced by about 2-3%.

Accordingly, by increasing the temperature of the skim milk phase during membrane filtration the flow through the membrane module will increase but the fouling in the membranes will also increase. Optionally, by decreasing the temperature of the skim milk phase during membrane filtration the fouling in the membranes will be reduced but the flow through the membrane module will also be decreased.

Until now, the golden mean has been to subject the protein containing dairy product to some kind of pre-treatment, usually heat treatment at a temperature in the range 50-65°C, to reduce the risk of fouling in the membranes during membrane filtration. The use of higher temperatures is not advisable, since whey proteins are assumed to denature at temperatures above 65 °C.

Further, it has been assumed that it is of most importance that the temperature of the protein containing dairy product, during membrane filtration, does not exceed the pre-treatment temperature of 50-65°C. Since the pumps in the membrane filtration assembly normally increases the temperature of the protein containing dairy product by 2-6°C, it has therefore been common to have some kind of cooling device placed in the circulation of the retentate (normally for small plants/pilot plants) (NO310173) and/or to cool down the skim milk prior to membrane filtration.

Surprisingly, it has now been discovered that it is the temperature of the membrane surfaces and not the temperature of the skim milk/retentate that is of most importance in order to avoid fouling in the membranes. By keeping the temperature of the membrane surfaces low, it is possible to increase the temperature of the skim milk/retentate without getting significant problems with fouling in the membranes.

The result of the discovery is an improved method for processing dairy products by means of membrane filtration, where fouling in the membranes is significantly reduced/avoided and at the same time the flow through the membrane module is increased.

A first aspect of the present invention relates to a method for processing dairy products by means of membrane filtration, said method comprising the following steps:
a) optionally, supplying the dairy product to a balance tank (figure 1.1; figure 3.1);
b) subjecting the dairy product to membrane filtration (figure 1.2; figure 3.2; figure 4.MF1/MF2; figure 5.MF1/MF2) to form a permeate fraction and a retentate fraction, wherein said dairy product is heated to a temperature in the range 50-65 °C prior to membrane filtration; and
c) cooling the permeate fraction (figure 1.3; figure 3.2; figure 4.1; figure 5.1) to a temperature that is lower than the temperature of the retentate fraction, wherein the temperature differential between the permeate and retentate fraction is at least 1 °C, and wherein at least part of the permeate fraction is circulated over a permeate inlet and outlet of a membrane filtration module, resulting in a cooling of the membrane surfaces.

In one embodiment according to the present invention, the dairy product, e.g. skim milk, butter milk or whey, is supplied to a balance tank (figure 1.1; figure 3.1). The main purpose of the balance tank is to act as a buffer for the dairy product in the event of temporary stops/interruptions during production and also as to obtain a continuous supply of dairy product.

The temperature of the protein containing dairy product in said balance tank is preferably in the range 50-70°C, more preferably in the range 55-65°C, even more preferably in the range 60-65°C and most preferably in the range 62-65°C.

Preferably, the dairy product is caused to pass through a deaerator prior to entering the membrane filtration module. The deaerator treatment removes excess air in the product which else may cause fouling in the membranes later on in the process.

The dairy product is then led, e.g. using a circulation pump (figure 1.M1 and M2; figure 3.M1 and M2), to a membrane filtration module (figure 1.2; figure 3.2; figure 4.MF1; figure 5.MF1) where the dairy product is separated into a retentate fraction and a permeate fraction.

In order to maintain high cross flow velocity through the membrane filtration the temperature of the dairy product/retentate is maintained at a temperature in the range 50-65°C during membrane filtration, more preferably in the range 55-65°C, even more preferably in the range 58-65°C and most preferably in the range 60-65°C.

In one embodiment according to the present invention, it is preferred that the temperature of the dairy product/retentate, when entering the membrane filtration module, is in the range 50-70°C, more preferably in the range 55-65°C, even more preferably in the range 58-65°C and most preferably in the range 58-60°C.

There are a number of different membrane filtration modules on the market today. One of the two most common membrane module systems is the so-called "uniform transmembrane pressure (UTP)" system. By including beads on the permeate side of the membrane, the system maintains a low but uniform transmembrane pressure with high cross flow velocity, which reduces fouling and cake build-up, and improves the utilization of available filtration area. However, the system suffers from complicated and time consuming membrane replacement procedures and requires continuous circulation of the permeate flow.

The other of said two most common membrane module systems is based on gradient membranes. By using membranes having increased permeation resistance towards the input side of the membrane module, the system maintains a low but uniform transmembrane pressure with high cross flow velocity. Additionally, the system does not require a continuous circulation of the permeate flow and does not suffer from complicated and time consuming membrane replacement procedures.

The membrane filtration module utilized according to the present invention may be any membrane module suitable for processing dairy products, such as a membrane module system based on the UTP principle, a membrane module system based on gradient membranes, other suitable membrane module systems or any combinations thereof.

The membranes of the membrane filtration module are preferably made of a support ceramic layer and a surface membrane layer (such as e.g. Zirconia, Titania and Alumina based membranes), but may also be manufactured from other materials such as glass, polymers or the like. Even though the present disclosure is focused on the use of membranes, it should also be understood that micro sieves may be utilized instead of membranes without deviating from the inventive concept of the present disclosure.

The filter in the membrane filtration module is preferably selected from the group consisting of microfilter (MF), ultrafilter (UF) and nanofilter (NF).

In one preferred embodiment according to the present invention, at least one membrane filtration module has a filter with an effective pore size in the range 0.5-2.0 µm, more preferably in the range 0.8-2.0 µm and most preferably in the range 0.8-1.4 µm. Filters having a pore size in this range are particularly suitable for reducing the amount of microorganisms in the dairy product.

In one preferred embodiment according to the present invention, at least one membrane filtration module has a filter with an effective pore size in the range 0.05-0.5 µm, more preferably in the range 0.05-0.3 µm and most preferably in the range 0.1-0.2 µm. Filters having a pore size in this range are particularly suitable for fractionating the proteins, particularly casein proteins, present in the dairy product.

In one preferred embodiment according to the present invention, at least one membrane filtration module has a filter with an effective pore size that is sufficient to retain suspended solids and solutes having a molecular weight higher than 100 kDa, more preferably higher than 75 kDa, even more preferably higher than 50 kDa, most preferably higher than 25 kDa, such as higher than 10 kDa.

In one preferred embodiment according to the present invention, at least one membrane filtration module has a filter with an effective pore size that is sufficient to retain suspended solids and solutes having a molecular weight higher than 500 Da, more preferably higher than 200 Da and even more preferably higher than 100 Da.

When the protein containing dairy product enters the membrane filtration module (figure 1.2; figure 3.2; figure 4.MF1; figure 5.MF1), the product is divided into two flows, a retentate flow and a permeate flow.

The retentate flow may be supplied to additional membrane filtration module(s) (figure 4.MF2; figure 5.MF2), and/or alternatively be recycled back, e.g. using a circulation pump (figure 1.M2; figure 3.M2), to the input side of the membrane filtration module (figure 1.2; figure 3.2). Said additional membrane filtration module(s) may be identical or different (different membrane module system, different membrane material, different effective pore size and so on) from the first membrane filtration module (figure 1.2; figure 3.2; figure 4.MF1; figure 5.MF1).

In one embodiment according to the present invention, the permeate flow is led, e.g. using a circulation pump (figure 1.M3), to a cooling device (figure 1.3; figure 4.1; figure 5.1.). The cooling device may be any kind of device suitable to lower the temperature of the permeate flow such as a heat exchanger, e.g. a plate heat exchanger or more preferably a tube heat exchanger.

In another embodiment according to the present invention, the membrane filtration module has an integrated cooling device (figure 2; figure 3.2) which renders a separate permeate cooling device (as shown in figure 1.3) superfluous. The integrated cooling device may be any kind of cooling device suitable to be integrated with a membrane filtration module. An example of a suitable membrane filtration module having an integrated cooling device is illustrated in figure 2.

The membrane filtration assembly in figure 2 shows a surrounding housing (1) in which there are mounted a tube heat exchanger (4) with connections (6) to a cooling media. Cooling media is flowing in the space (5) on the outside of the tubes. The membranes (3) are placed through the tubes in the tube heat exchanger and fitted to each end of the housing with seals. The permeate which passes the filter membranes is circulated over the permeate inlet and outlet (figure 2.8). The enlarged item B in figure 2 shows how the permeate will circulate in the space (7) inside the tubes of the heat exchanger and the temperature of the permeate will be influenced by the cooling media outside the tubes of the tube heat exchanger.

The cross-section of the housing A_A in figure 2 shows how the tube heat exchanger with membranes could be arranged. The enlarge item C shows how the conventional construction of a membrane is build up. It consists of a porous ceramic supporting structure (3) with a plurality of retentate channels (15). Each channel is provided with a filter membrane (16) on the channel surface. The enlarged item C also shows how the tube of the heat exchanger is surrounding the membrane, but giving space (7) for permeate to be circulated.

Even though figure 2 illustrates a membrane filtration assembly with 19 membranes, it should be understood that the number of membranes is not crucial to the function of the device and that similar systems having a different number of membranes also are within the scope of the present invention.

In one preferred embodiment according to the present invention, the temperature of the permeate flow is at least 1°C colder than the temperature of the retentate flow, more preferably the temperature of the permeate flow is at least 3°C colder than the temperature of the retentate flow, even more preferably the temperature of the permeate flow is at least 5°C colder than the temperature of the retentate flow and most preferably the temperature of the permeate flow is at least 7°C colder than the temperature of the retentate flow, such as a temperature differential of at least 10°C, 12°C, 15°C, 20°C, 25°C, 30°C or 40°C.

In one preferred embodiment, the temperature of the permeate fraction is maintained at a temperature in the range 0-64°C (such as e.g. 0-64°C, 0-60°C, 0-55°C, 0-50°C, 0-45°C, 0-40°C, 0-35°C, 0-30°C, 0-25°C, 0-20°C or 0-15°C) during membrane filtration, e.g. in the range 10-50°C (such as e.g. 10-45°C, 10-40°C, 10-35°C, 10-30°C, 10-25°C, 10-20°C or 10-15°C), in the range 20-50°C (such as e.g. 20-45°C, 20-40°C, 20-35°C, 20-30°C or 20-25°C), in the range 30-50°C (such as e.g. 30-45°C, 30-40°C or 30-35°C) or in the range 40-50°C (such as e.g. 40-45°C).

In a further embodiment according to the present invention, the permeate flow is maintained at a temperature sufficient to cool down the membrane surfaces to a temperature that is at least 1 °C colder than the temperature of the retentate flow, more preferably at least 3°C colder than the temperature of the retentate flow, even more preferably at least 5°C colder than the temperature of the retentate flow and most preferably at least 7°C colder than the temperature of the retentate flow, such as a temperature differential between the membrane surfaces and retentate flow of at least 10°C, 12°C, 15°C, 20°C, 25°C, 30°C or 40°C.

When the permeate flow exits the cooler device (figure 1.3)/membrane filtration module having an integrated cooling device (figure 3.2), the permeate may be supplied to additional membrane filtration module(s) (figure 4.MF2; figure 5.MF2), and/or alternatively be recycled back to the permeate input side of the membrane filtration module (figure 1.2; figure 3.2).

Said additional membrane filtration module(s) may be identical or different (different membrane module system, different membrane material, different effective pore size and so on) from the first membrane filtration module (figure 1.2).

In one embodiment according to the present invention, the permeate fraction is, subsequent to the cooling treatment, recycled back to the permeate input side of the membrane filtration module.

In one further embodiment according to the present invention, the permeate fraction is circulated over the permeate inlet and outlet of the membrane filtration module. If gradient membranes are being utilized, the main purpose of circulating the permeate flow is to cool down the membrane surfaces. However, if a so-called UTP system is being utilized, the purpose of circulating the permeate flow is to cool down the membrane surfaces and also to give a certain pressure drop through the membrane module.

In one preferred embodiment according to the present invention, the inlets (both permeate inlet and retentate inlet), outlets (both permeate outlet and retentate outlet) and means for recirculation (e.g. circulation pumps) are so arranged as to maintain a retentate flow on the retentate side of the membrane filter and a permeate flow on the permeate side of the membrane filter in such a manner that the two flows are passed along the membrane filter. In one embodiment, said two flows are cocurrently passed along the membrane filter and in another embodiment said two flows are concurrently passed along the membrane filter. Most preferably said two flows are passed along the membrane filter with uniform drop of pressure across the entire membrane surface.

In the case of multiple membrane filtration modules, it is preferred that the retentate fraction from the first membrane filtration module is subjected to a diafiltration step before entering the next membrane filtration module (figure 5).

A second aspect of the present invention relates to a membrane filtration assembly for carrying out the method above, comprising
a) feed inlet opening to the retentate side of a membrane filter;
b) retentate outlet;
c) means for recirculating at least part of the retentate from the retentate outlet to the retentate inlet;
d) permeate outlet;
e) permeate inlet;
f) means for recirculating at least part of the permeate from the permeate outlet to the permeate inlet; and
g) cooling device, such as a heat exchanger, being arranged to maintain a lower temperature in the permeate flow than in the retentate flow, wherein said cooling device is located in the permeate circuit between the permeate inlet and permeate outlet;
said inlets, outlets and means for recirculation being arranged to maintain a retentate flow on the retentate side of the membrane filter and a permeate flow on the permeate side of the membrane filter in such a manner that the two flows are passed along the membrane filter, e.g. cocurrently passed along the membrane filter or concurrently passed along the membrane filter.

One embodiment according to the second aspect of the present invention relates to a membrane filtration assembly having
a) feed inlet opening to the retentate side of a membrane filter;
b) retentate outlet;
c) means for recirculating at least part of the retentate from the retentate outlet to the retentate inlet;
d) permeate outlet;
e) permeate inlet;
f) means for recirculating at least part of the permeate from the permeate outlet to the permeate inlet; and
g) cooling device, such as a heat exchanger, being arranged to maintain a lower temperature in the permeate flow than in the retentate flow, wherein said cooling device is located in the permeate circuit between the permeate inlet and permeate outlet;
said inlets, outlets and means for recirculation being arranged to maintain a retentate flow on the retentate side of the membrane filter and a permeate flow on the permeate side of the membrane filter in such a manner that the two flows are passed along the membrane filter, e.g. cocurrently passed along the membrane filter or concurrently passed along the membrane filter.

In one embodiment according to the second aspect of the present invention, said inlets, outlets and means for recirculation being arranged to maintain a retentate flow on the retentate side of the membrane filter and a permeate flow on the permeate side of the membrane filter in such a manner that the two flows are passed along the membrane filter, e.g. cocurrently passed along the membrane filter or concurrently passed along the membrane filter, with uniform drop of pressure across the entire membrane surface. According to the second aspect of the present invention said cooling device is located in the permeate circuit between the permeate inlet and permeate outlet. According to the second aspect of the present invention said membrane filtration assembly is suitable to practice the method according to the first aspect of the present invention.

Depending on the membrane filtration module(s) that are being used, the method according to the present invention is particularly suitable for reducing the amount of organisms present in the dairy product and/or fractionating the proteins present in the dairy product.

## Claims

1. Method for processing dairy products by means of membrane filtration, said method comprising the following steps:
a) optionally, supplying the dairy product to a balance tank (figure 1.1; figure 3.1);
b) subjecting the dairy product to membrane filtration (figure 1.2; figure 3.2) to form a permeate fraction and a retentate fraction, wherein said dairy product is heated to a temperature in the range 50-65 °C prior to membrane filtration; and
c) cooling the permeate fraction (figure 1.3; figure 3.2) to a temperature that is lower than the temperature of the retentate fraction, wherein the temperature differential between the permeate and retentate fraction is at least 1 °C, and wherein at least part of the permeate fraction is circulated over a permeate inlet and outlet of a membrane filtration module, resulting in a cooling of the membrane surfaces.

2. Method according to claim 1, wherein said dairy product is selected from the group consisting of skim milk, butter milk and whey.

3. Method according to any one of the preceding claims, wherein at least part of the retentate fraction is circulated over a retentate inlet and outlet of the membrane filtration module.

4. Method according to any one of the preceding claims, wherein said method is for fractionating proteins present in said diary product.

5. Method according to any one of the preceding claims, wherein said method is for reducing the amount of microorganisms in said diary product.

6. Method according to any one of the preceding claims, wherein the permeate flow and the retentate flow are cocurrently passed along the membrane filter, said two flows being separated by said membrane filter.

7. Method according to any one of the preceding claims, wherein the filter in said membrane filtration module is selected from the group consisting of microfilter (MF), ultrafilter (UF) and nanofilter (NF).

8. Membrane filtration assembly for carrying out the method according to any one of claims 1 to 7, comprising
a) feed inlet opening to the retentate side of a membrane filter;
b) retentate outlet;
c) means for recirculating at least part of the retentate from the retentate outlet to the retentate inlet;
d) permeate outlet;
e) permeate inlet;
f) means for recirculating at least part of the permeate from the permeate outlet to the permeate inlet; and
g) cooling device being arranged to maintain a lower temperature in the permeate flow than in the retentate flow, wherein said cooling device is located in the permeate circuit between the permeate inlet and permeate outlet;
said inlets, outlets and means for recirculation being arranged to maintain a retentate flow on the retentate side of the membrane filter and a permeate flow on the permeate side of the membrane filter, preferably in such a manner that the two flows are cocurrently passed along the membrane filter.

9. Membrane filtration assembly according to claim 8, wherein said cooling device is a heat exchanger.

10. Membrane filtration assembly according to claim 8, wherein the cooling device is integrated in the membrane filtration module (figure 3.2).

11. Membrane filtration assembly according to claim 8, wherein the cooling device is separate from the membrane filtration module (figure 1.3).

## Patentansprüche

1. Verfahren zur Verarbeitung von Molkereiprodukten mittels Membranfiltration, wobei das Verfahren die folgenden Schritte umfasst:
a) gegebenenfalls Einspeisen des Molkereiproduktes in einen Vorlaufbehälter (Figur 1.1; Figur 3.1);
b) Durchführung einer Membranfiltration des Molkereiproduktes (Figur 1.2; Figur 3.2), um eine Permeatfraktion und eine Retentatfraktion zu bilden, wobei das Molkereiprodukt vor der Membranfiltration auf eine Temperatur im Bereich von 50-65 °C erwärmt wird, und
c) Abkühlen der Permeatfraktion (Figur 1.3; Figur 3.2) auf eine Temperatur, die niedriger als die Temperatur der Retentatfraktion ist, wobei die Temperaturdifferenz zwischen Permeat- und Retentatfraktion wenigstens 1 °C beträgt, und
wobei zumindest ein Teil der Permeatfraktion über einen Permeateinlass und -auslass eines Membranfiltrationsmoduls umgewälzt wird, was eine Kühlung der Membranoberflächen bewirkt.

2. Verfahren nach Anspruch 1, wobei das Molkereiprodukt aus der Gruppe ausgewählt ist, die aus Magermilch, Buttermilch und Molke besteht.

3. Verfahren nach einem der vorhergehenden Ansprüche, wobei zumindest ein Teil der Retentatfraktion über einen Retentateinlass und -auslass des Membranfiltrationsmoduls umgewälzt wird.

4. Verfahren nach einem der vorhergehenden Ansprüche, wobei das Verfahren zum Fraktionieren von in dem Molkereiprodukt vorhandenen Proteinen vorgesehen ist.

5. Verfahren nach einem der vorhergehenden Ansprüche, wobei das Verfahren zum Verringern der Menge an Mikroorganismen in dem Molkereiprodukt vorgesehen ist.

6. Verfahren nach einem der vorhergehenden Ansprüche, wobei der Permeatfluss und der Retentatfluss den Membranfilter nach dem Gleichstromprinzip durchlaufen, wobei die beiden Flüsse durch den Membranfilter voneinander getrennt sind.

7. Verfahren nach einem der vorhergehenden Ansprüche, wobei der Filter in dem Membranfiltrationsmodul aus der Gruppe ausgewählt ist, die aus Mikrofilter (MF), Ultrafilter (UF) und Nanofilter (NF) besteht.

8. Membranfiltrationsanordnung zum Durchführen des Verfahrens nach einem der Ansprüche 1 bis 7, umfassend
a) eine Aufgabeöffnung zur Retentatseite eines Membranfilters;
b) einen Retentatauslass;
c) Mittel zur Rückführung wenigstens eines Teils des Retentats vom Retentatauslass zum Retentateinlass;
d) einen Permeatauslass;
e) einen Permeateinlass;
f) Mittel zur Rückführung wenigstens eines Teils des Permeats vom Permeatauslass zum Permeateinlass, und
g) eine Kühlvorrichtung, die angeordnet ist, um die Temperatur im Permeatfluss niedriger als im Retentatfluss zu halten, wobei die Kühlvorrichtung im Permeatkreislauf zwischen dem Permeateinlass und dem Permeatauslass angeordnet ist;
wobei die Einlässe, Auslässe und Rückführungsmittel angeordnet sind, um einen Retentatfluss auf der Retentatseite des Membranfilters und einen Permeatfluss auf der Permeatseite des Membranfilters beizubehalten, vorzugsweise so, dass die zwei Flüsse den Membranfilter nach dem Gleichstromprinzip passieren.

9. Membranfiltrationsanordnung nach Anspruch 8, wobei die Kühlvorrichtung ein Wärmetauscher ist.

10. Membranfiltrationsanordnung nach Anspruch 8, wobei die Kühlvorrichtung in das Membranfiltrationsmodul integriert ist (Figur 3.2).

11. Membranfiltrationsanordnung nach Anspruch 8, wobei die Kühlvorrichtung von dem Membranfiltrationsmodul getrennt ist (Figur 1.3).

## Revendications

1. Procédé de traitement de produits laitiers au moyen d'une filtration sur membrane, ledit procédé comprenant les étapes suivantes :
a) facultativement, la fourniture du produit laitier à un réservoir d'équilibre (figure 1.1 ; figure 3.1) ;
b) la soumission du produit laitier à une filtration sur membrane (figure 1.2 ; figure 3.2) pour former une fraction de perméat et une fraction de rétentat, dans lequel ledit produit laitier est chauffé à une température dans la plage de 50 à 65 °C avant filtration sur membrane ; et
c) le refroidissement de la fraction de perméat (figure 1.3 ; figure 3.2) à une température qui est inférieure à la température de la fraction de rétentat, dans lequel le différentiel de température entre la fraction de perméat et la fraction de rétentat est d'au moins 1 °C, et dans lequel au moins une partie de la fraction de perméat est mise à circuler sur une admission et un refoulement de perméat d'un module de filtration sur membrane, aboutissant à un refroidissement des surfaces de membrane.

2. Procédé selon la revendication 1, dans lequel ledit produit laitier est choisi dans le groupe consistant en le lait écrémé, le babeurre et le petit lait.

3. Procédé selon l'une quelconque des revendications précédentes, dans lequel au moins une partie de la fraction de rétentat est mise à circuler sur une admission et un refoulement de rétentat du module de filtration sur membrane.

4. Procédé selon l'une quelconque des revendications précédentes, dans lequel ledit procédé est destiné au fractionnement de protéines présentes dans ledit produit laitier.

5. Procédé selon l'une quelconque des revendications précédentes, dans lequel ledit procédé est destiné à la réduction de la quantité de micro-organismes dans ledit produit laitier.

6. Procédé selon l'une quelconque des revendications précédentes, dans lequel l'écoulement de perméat et l'écoulement de rétentat sont passés à cocourant le long du filtre à membrane, lesdits deux écoulements étant séparés par ledit filtre à membrane.

7. Procédé selon l'une quelconque des revendications précédentes, dans lequel le filtre dans ledit module de filtration sur membrane est choisi dans le groupe consistant en un microfiltre (MF), un ultrafiltre (UF) et un nanofiltre (NF).

8. Ensemble filtration sur membrane destiné à réaliser le procédé selon l'une quelconque des revendications 1 à 7, comprenant
a) une admission d'alimentation débouchant du côté rétentat d'un filtre à membrane ;
b) un refoulement de rétentat ;
c) un moyen de recirculation d'au moins une partie du rétentat depuis le refoulement de rétentat à l'admission de rétentat ;
d) un refoulement de perméat ;
e) une admission de perméat ;
f) un moyen de recirculation d'au moins une partie du perméat depuis le refoulement de perméat à l'admission de perméat ; et
g) un dispositif de refroidissement agencé pour maintenir une température inférieure dans l'écoulement de perméat que dans l'écoulement de rétentat, dans lequel ledit dispositif de refroidissement est situé dans le circuit de perméat entre l'admission de perméat et le refoulement de perméat ;
lesdits admissions, refoulements et moyens de recirculation étant agencés pour maintenir un écoulement de rétentat du côté rétentat du filtre à membrane et un écoulement de perméat du côté perméat du filtre à membrane, de préférence de telle manière que les deux écoulements soient passés à cocourant le long du filtre à membrane.

9. Ensemble filtration sur membrane selon la revendication 8, dans lequel ledit dispositif de refroidissement est un échangeur de chaleur.

10. Ensemble filtration sur membrane selon la revendication 8, dans lequel le dispositif de refroidissement est intégré dans le module de filtration sur membrane (figure 3.2).

11. Ensemble filtration sur membrane selon la revendication 8, dans lequel le dispositif de refroidissement est séparé du module de filtration sur membrane (figure 1.3).
